# FASCICULE DE BREVET EUROPEEN

(11) **EP 0 500 470 B1**
(45) Date de publication et mention de la délivrance du brevet: **11.01.1995**
(21) Numéro de dépôt: 92400459.1
(22) Date de dépôt: 21.02.1992
(51) Int. Cl.: A01K 41/00

(54) **Installation d'incubation et d'éclosion pour oeufs**
Anlage zum Brüten und Schlüpfen von Eiern
Installation for incubating and hatching eggs

(30) Priorité: 21.02.1991 FR 9102084
(43) Date de publication de la demande: 26.08.1992
(73) Titulaire: Lemonnier, Yves, F-53240 Saint-Jean-sur-Mayenne (FR)
(72) Inventeur: Lemonnier, Yves, F-53240 Saint-Jean-sur-Mayenne (FR)
(74) Mandataire: Dawidowicz, Armand

(56) Documents cités:
- DE-A- 1 607 239
- US-A- 2 654 345

## Description

L'invention concerne une installation d'incubation et d'éclosion pour oeufs du type comprenant une enceinte fixe dans laquelle sont disposées bout à bout deux rangées de chariots portant des oeufs en couches superposées, lesdits chariots comportant des moyens d'inclinaison alternée des oeufs au cours du séjour dans l'enceinte, et des moyens de chauffage et de ventilation de l'enceinte.

La ventilation et le chauffage homogènes des oeufs pendant toute la période d'incubation sont des conditions essentielles pour obtenir une éclosion simultanée, ou au moins en une courte période de temps, de tous les oeufs contenus dans l'incubateur. En effet, si la durée totale d'éclosion est trop longue, les derniers oiseaux non libérés de leur coquille sont rapidement tués ou prisonniers en raison des conditions de chaleur, d'hygrométrie et de la présence de duvet dégagé par les oiseaux éclos en premier, qui continuent à régner dans l'enceinte.

On connaît des installations du type décrit à l'introduction dans lesquelles les moyens de ventilation sont constitués par une pluralité de ventilateurs occupant la paroi supérieure, ou une paroi de fond ou une paroi latérale de l'enceinte. Il s'ensuit des circuits privilégiés de circulation d'air qui n'assurent pas une circulation homogène sans turbulence, de l'air chauffé à l'intérieur de l'enceinte d'incubation. En outre, ces installations connues nécessitent l'utilisation de ventilateurs d'évacuation de l'air qui a traversé les couches d'oeufs, l'air ainsi chauffé étant perdu et devant être remis à l'atmosphère.

On a proposé (US-A-2.654.345) de créer une circulation d'air réversible à l'intérieur de l'enceinte au moyen d'un grand ventilateur unique disposé à une extrémité de l'enceinte en couvrant les deux rangées de chariots, le sens de rotation du ventilateur étant inversé périodiquement avec la modification d'inclinaison des oeufs. Cette solution est difficile à mettre en oeuvre du fait de la dimension du ventilateur et de sa rotation dans deux sens opposés. Elle souffre en outre des mêmes inconvénients pour ce qui concerne l'évacuation de l'air.

Les installations connues présentent en outre l'inconvénient commun que, pour obtenir une capacité suffisante tout en permettant un brassage de l'air, les chariots portant les oeufs sont très hauts, ce qui rend leurs déplacements et leurs chargements et déchargements délicats, et donne une hauteur très élevée à la couveuse.

La présente invention vise à fournir une nouvelle installation du type décrit à l'introduction qui ne présente pas les inconvénients des installations connues.

A cet effet, l'installation selon l'invention est caractérisée en ce que ladite enceinte est divisée en deux sections égales par une cloison longitudinale médiane pouvant être ouverte et séparant les deux rangées de chariots, les deux sections ayant une coupe transversale sensiblement carrée, un ventilateur de circulation étant disposé à deux extrémités opposées de chacune desdites sections, coaxialement à la section correspondante et avec des pales dont le rayon est légèrement inférieur à la moitié du côté desdites sections, un ventilateur de reprise de dimensions analogues à celles des ventilateurs de circulation étant disposé à l'autre extrémité de chacune desdites sections, les extrémités de ladite enceinte étant fermées chacune par une paroi d'extrémité espacée des ventilateurs de circulation et de reprise adjacents, une des parois latérales du tunnel comportant des portes de chargement et de déchargement des chariots.

Les ventilateurs de circulation tirent l'air provenant des oeufs d'une section et l'amènent au ventilateur de reprise de l'autre section qui pousse cet air sur les oeufs de la seconde section, en formant ainsi un flux continu d'air à des vitesses constantes. Les ventilateurs de reprise évitent les effets de force centrifuge sur les parois extérieures et malaxent l'air amené par les ventilateurs de circulation dans l'espace ou sas formé entre les ventilateurs et les parois d'extrémité adjacentes. La poussée des ventilateurs de reprise sur l'air est équilibrée par le fait qu'elle se produit face à la masse des oeufs disposés dans le chariot adjacent, disposés par étages et inclinés à 45° selon la technique habituelle. L'air pénètre ainsi par les espaces entre les rangées d'oeufs, sous une pression relativement élevée, de sorte qu'il se répartit en filets homogènes dans l'ensemble de la section, cette circulation étant assistée par le ventilateur de circulation disposé à l'autre extrémité de la section qui aspire l'air de la section.

La forme carrée en coupe transversale de chaque section, qui correspond au rayon des pales des ventilateurs et permet ainsi d'obtenir la circulation continue et homogène souhaitée, nécessite l'utilisation de chariots de même section dont la manipulation, le chargement et le déchargement sont grandement facilités par rapport aux chariots de grande hauteur utilisés dans les installations connues.

La cloison séparant les deux sections évite toute friction entre les flux d'air se déplaçant en sens contraire dans les deux sections. Cette cloison est avantageusement constituée de deux panneaux coulissants pour l'introduction et l'extraction des chariots dans la section éloignée des portes de chargement et de déchargement.

Selon une forme de réalisation préférée de l'invention, des moyens de conditionnement de l'air sont disposés entre chaque ventilateur de circulation et l'extrémité adjacente de la section qu'il couvre. Le conditionnement de l'air -chauffage ou refroidissement- est donc effectué à la sortie d'une section et avant le malaxage dans le sas d'extrémité adjacent, ce malaxage apportant une homogénéisation de la température de l'air et évitant tout choc thermique sur les oeufs lors de l'entrée dans l'autre section.

Chacun des ventilateurs peut être entraîné individuellement. De préférence, chaque ventilateur de circulation et le ventilateur de reprise adjacent sont entraînés par un même moteur par exemple par l'intermédiaire d'une courroie sans fin. On évite ainsi la multiplication des moteurs d'entraînement, qui sont des sources de calories difficilement contrôlables, tout en assurant une parfaite synchronisation des ventilateurs.

L'invention sera bien comprise à la lecture de la description suivante faite en se référant au dessin annexé, dans lequel :

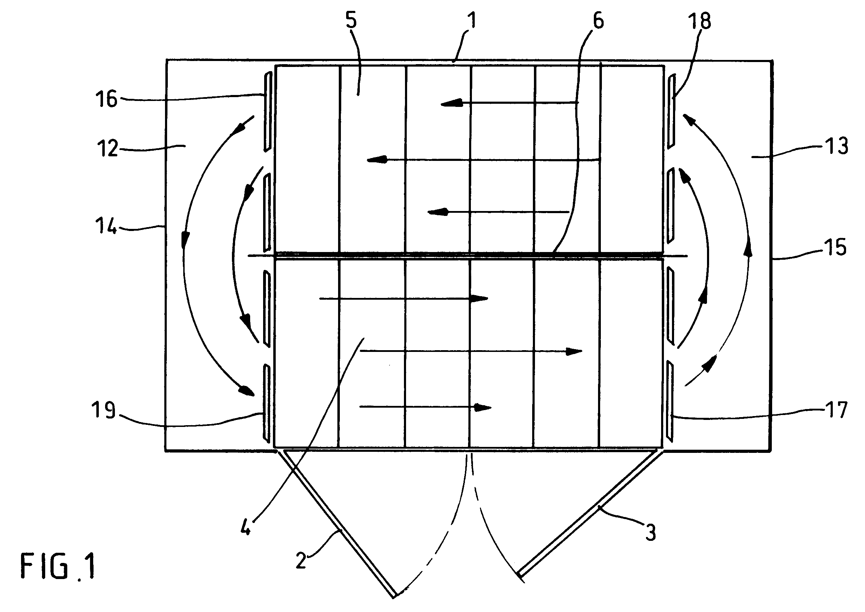

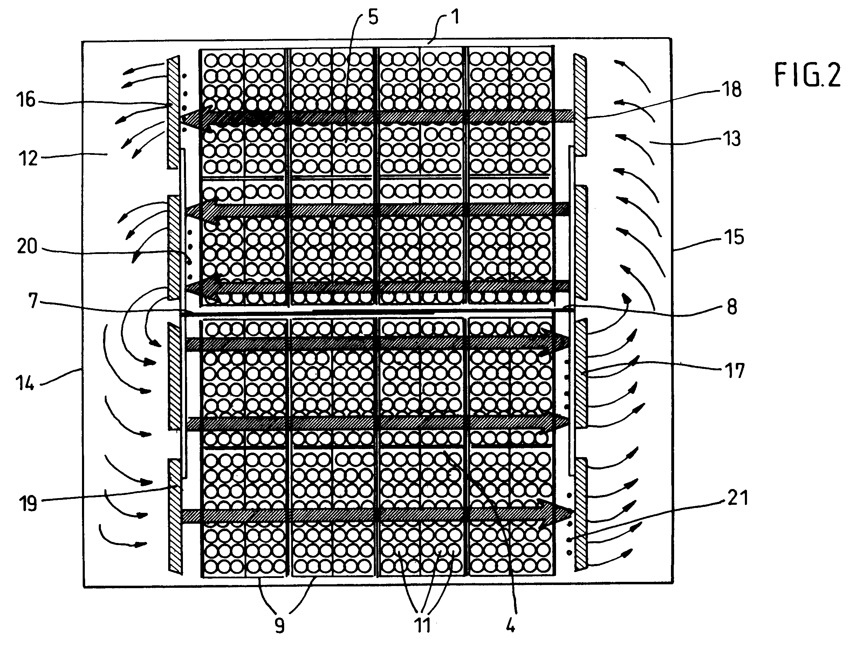

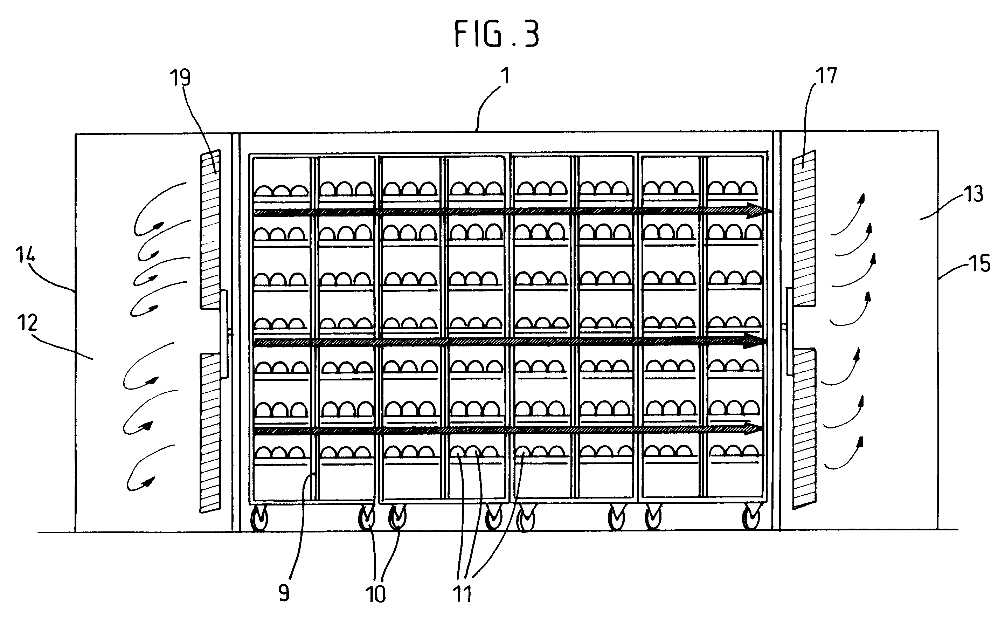

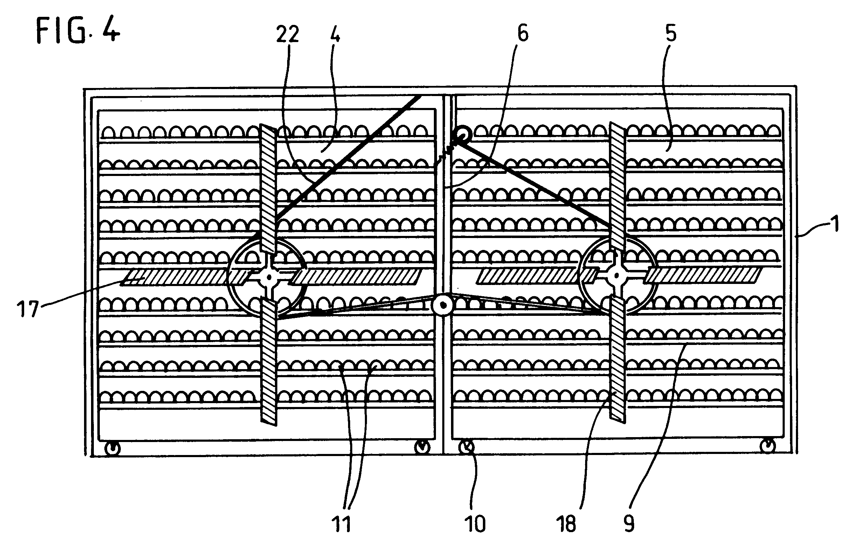

La figure 1 est une vue schématique de principe d'une installation selon un exemple de réalisation de l'invention; la figure 2 est une vue en plan et coupe horizontale de l'installation de la figure 1; la figure 3 est une vue en élévation latérale et coupe verticale de l'installation des figures 1 et 2, et la figure 4 est une vue en élévation frontale et coupe verticale de l'installation des figures 1 à 3.

L'installation comprend une enceinte 1 de forme rectangulaire fermée sur ses quatre faces, à l'exception de deux portes battantes 2, 3 permettant l'accès à une partie centrale de l'enceinte 1. Cette partie centrale est divisée en deux sections égales 4, 5 par une paroi longitudinale 6 constituée de deux demi-panneaux 7, 8 (figure 2) pouvant coulisser l'un sur l'autre pour donner accès à la section 5 la plus éloignée des portes 2, 3.

Dans chacune des sections 4 et 5 est disposée une file de chariots 9 montés sur des roulettes 10 et portant des rangées d'oeufs 11 pouvant être inclinés à 45 ° dans un sens et dans l'autre. Ces chariots 9 peuvent être de tout type connu, tel que celui décrit par exemple dans FR-A-2.596.611.

Aux deux extrémités des sections 4 et 5, un espace vide ou sas 12, 13 est ménagé avec la paroi d'extrémité 14, 15 adjacente de l'enceinte 1. La coupe transversale de chaque section 4, 5 est sensiblement carrée. Un ventilateur de circulation 16, dont les pales ont un rayon légèrement inférieur au demi-côté des sections 4, 5, est disposé à l'extrémité de la section 5 adjacente au sas 12 et est monté coaxialement à cette section 5. Un second ventilateur de circulation 17 est monté coaxial à l'extrémité de la section 4 adjacente au sas 13.

Un ventilateur de reprise 18 est monté coaxial à la section 5 à son extrémité adjacente au sas 13 et un second ventilateur de reprise 19 est monté coaxial à la section 4 à son extrémité adjacente au sas 12. Les ventilateurs 17, 18 et 19 ont une construction et des dimensions analogues ou identiques à celles du ventilateur 16.

Les ventilateurs 16 et 17 tirent ou aspirent l'air contenu dans les sections 5 et 4 respectivement pour l'envoyer dans le sas 12 ou 13, où il est malaxé avant d'être repris par les ventilateurs 19 et 18 qui le poussent dans les sections 4 et 5 respectivement. On obtient ainsi une circulation continue et homogène de l'air, avec des vitesses constantes. La paroi 6 interdit tout contact entre les flux d'air circulant en sens inverse dans les sections 4 et 5. L'air circule en filets entre les couches d'oeufs 11 qui sont ainsi soumis au même traitement, quelle que soit leur position dans les sections 4 et 5. Les oeufs se présentent au bêchage dans le même temps, ce bêchage étant favorisé par la montée en gaz carbonique mieux concentrée par l'homogénéité de l'air de balayage. Dès l'ouverture de l'oeuf, le degré d'hygrométrie monte naturellement dans l'enceinte par le propre dégagement des oiseaux (respiration, évaporation des liquides), de sorte que la membrane coquillère est maintenue souple, ce qui en facilite le déchirement par l'oiseau, qui naît ainsi plus robuste. Ils éclosent donc tous en même temps, ou au moins en une période de temps réduite, ce qui évite les pertes subies avec les installations connues.

L'enceinte 1 comporte également, de manière traditionnelle, des moyens d'humidification (non représentés) et des moyens de conditionnement de l'air.

L'invention prévoit de disposer les moyens de conditionnement de l'air, tels que des résistances de chauffage et les tubes de refroidissement 20, 21 (figure 2) entre les ventilateurs de circulation 16 et 17 et l'extrémité adjacente de la section 5, 4 correspondante. Les calories (ou les frigories dans le cas d'un refroidissement) sont ainsi brassées avec l'air dans les sas 12 et 13 avant d'être envoyées, régulièrement réparties, dans les sections 4 et 5. Cette homogénéité de température participe fortement au processus d'éclosion simultané qui est ainsi renforcé.

Les ventilateurs 16, 17, 18, 19 peuvent être entraînés chacun par un moteur individuel. L'invention prévoit cependant de les entraîner par un moteur unique (non représenté) entraînant les couples de ventilateurs 16, 19 - 17, 18 par une courroie sans fin 22, ou bien un moteur pour chaque couple. On limite ainsi le coût et, surtout, l'émission difficilement contrôlable de calories par les moteurs. On assure en outre une synchronisation des ventilateurs qui favorise la régularité du flux d'air.

## Revendications

1. Installation d'incubation et d'éclosion pour oeufs du type comprenant une enceinte (1) fixe dans laquelle sont disposées bout à bout deux rangées de chariots (9) portant des oeufs (11) en couches superposées, lesdits chariots (9) comportant des moyens d'inclinaison alternée des oeufs (11) au cours du séjour dans l'enceinte (1), et des moyens de chauffage, de refroidissement et de ventilation de l'enceinte (1),
caractérisée en ce que ladite enceinte (1) est divisée en deux sections égales (4, 5) par une cloison (6) longitudinale médiane pouvant être ouverte et séparant les deux rangées de chariots (9), les deux sections (4, 5) ayant une coupe transversale sensiblement carrée, un ventilateur de circulation (16, 17) étant disposé à deux extrémités opposées de chacune desdites sections (4, 5), coaxialement à la section (4, 5) correspondante et avec des pales dont le rayon est légèrement inférieur à la moitié du côté desdites sections (4, 5), un ventilateur de reprise (18, 19) de dimensions analogues à celles des ventilateurs de circulation (16, 17) étant disposé à l'autre extrémité de chacune desdites sections (4, 5), les extrémités de ladite enceinte (1) étant fermées chacune par une paroi d'extrémité (14, 15) espacée des ventilateurs de circulation (16, 17) et de reprise (18, 19) adjacents, une des parois latérales de l'enceinte (1) comportant des portes (2, 3) de chargement et de déchargement des chariots (9).

2. Installation selon la revendication 1,
caractérisée en ce que ladite cloison longitudinale (6) est constituée de deux panneaux (7, 8) coulissants pour l'introduction et l'extraction des chariots (9) dans la section (5) éloignée des portes de chargement et de déchargement (2, 3).

3. Installation selon l'une des revendications 1 et 2,
caractérisée en ce que des moyens (20, 21) de conditionnement de l'air sont disposés entre chaque ventilateur de circulation (16, 17) et l'extrémité adjacente de la section (5, 4) qu'il couvre.

4. Installation selon l'une des revendications 1 à 3,
caractérisée en ce que chaque ventilateur de circulation (16, 17) et le ventilateur de reprise (18, 19) adjacent sont entraînés par un même moteur par exemple par l'intermédiaire d'une courroie sans fin (22).

## Claims

1. Apparatus for incubating and hatching eggs of the type comprising a fixed enclosure (1) in which are disposed end to end two rows of trolleys (9) carrying the eggs (11) in superimposed layers, the said trolleys (9) comprising means for alternatingly inclining the eggs (11) during their stay in the enclosure (1) and means for heating, cooling and ventilation of the enclosure (1), characterised in that the said enclosure (1) is divided into two equal sections (4, 5) by a central longitudinal partition (6) which is capable of being opened and separates the two rows of trolleys (9), the two sections (4, 5) having a substantially square transverse section, a circulating fan (16, 17) being disposed at two opposite extremities of each of the said Sections (4, 5), coaxially with the corresponding sections (4, 5) and with blades the radius of which is slightly less than half of the side of the said sections (4, 5), a return fan (18, 19) of dimensions analogous to those of the circulating fans (16, 17) being disposed at the other end of each of the said sections (4, 5), the ends of the said enclosure (1) being each closed by an end wall surface (14, 15) spaced from the adjacent circulating fans (16, 17) and return fans (18, 19), one of the lateral wall surfaces of the enclosure (1) comprising doors (2, 3) for loading and unloading the trolleys (9).

2. Installation according to claim 1, characterised in that the said longitudinal partition (6) is constituted by two sliding panels (7, 8) for the introduction and removal of the trolleys (9) in the section (5) spaced from the loading and unloading doors (2, 3).

3. Installation according to one of claims 1 and 2, characterised in that air conditioning means (20, 21) are disposed between each circulation fan (16, 17) and the adjacent end of the section (5, 4) which it covers.

4. Installation according to one of claims 1 to 3, characterised in that each circulation fan (16, 17) and the adjacent return fan (18, 19) are driven by the same motor for example through the intermediary of an endless belt (22).

## Patentansprüche

1. Anlage zum Brüten und Schlüpfen von Eiern, bestehend aus einer ortsfesten Kammer (1), in der aneinander anstoßend zwei Reihen von Wagen (9) angeordnet sind, auf denen sich Eier (11) in übereinander geschichteten Lagen befinden, wobei die Wagen (9) Mittel zur abwechselnden Schrägstellung der Eier (11) während des Aufenthalts in der Kammer (1) umfassen, sowie Mittel zur Beheizung, Kühlung und Belüftung der Kammer (1) , **dadurch gekennzeichnet**, daß die Kammer (1) durch eine mittlere Längstrennwand (6), die geöffnet werden kann und die Wagenreihen (9) voneinander trennt, in zwei gleiche Abschnitte (4, 5) unterteilt wird, wobei die beiden Abschnitte (4, 5) einen in etwa quadratischen Querschnitt aufweisen, wobei ein Umlüfter (16, 17) an zwei gegenüberliegenden Enden jedes der Abschnitte (4, 5) koaxial zu dem entsprechenden Abschnitt (4, 5) angeordnet und mit Flügeln ausgeführt ist, deren Radius etwas kleiner als die Hälfte der Seitenlänge der Abschnitte (4, 5) ist, wobei ein Rücklüfter (18, 19) mit entsprechenden Abmessungen wie der Umlüfter (16, 17) an dem anderen Ende jedes der Abschnitte (4, 5) angeordnet ist, wobei die Enden der Kammer (1) jeweils durch eine Abschlußwand (14, 15) abgeschlossen sind, die in einem Abstand von dem benachbarten Umlüfter (16, 17) und Rücklüfter (18, 19) angeordnet ist, und wobei eine der Seitenwände der Kammer (1) Türen (2, 3) für das Ein- und Ausfahren der Wagen (9) umfaßt.

2. Anlage nach Anspruch 1, **dadurch gekennzeichnet,** daß die Längstrennwand (6) aus zwei verschiebbaren Platten (7, 8) für das Einstellen und Herausziehen der Wagen (9) in den bzw. aus dem von den Ein- und Ausfahrtüren (2, 3) entfernten Abschnitt (5) besteht.

3. Anlage nach einem der Ansprüche 1 oder 3 , **dadurch gekennzeichnet,** daß Mittel (20, 21) für die Temperierung der Luft zwischen jedem Umlüfter (16, 17) und dem benachbarten Ende des von ihm abgedeckten Abschnitts (5, 4) angeordnet sind.

4. Anlage nach einem der Ansprüche 1 bis 3 , **dadurch gekennzeichnet,** daß jeder Umlüfter (16, 17) und der benachbarte Rücklüfter (18, 19) durch ein und denselben Motor, beispielsweise über einen Treibriemen (22), angetrieben werden.
